# EUROPÄISCHE PATENTANMELDUNG

(11) **EP 4 571 131 A2**
(43) Veröffentlichungstag der Anmeldung: **18.06.2025**
(21) Anmeldenummer: 25167913.0
(22) Anmeldetag: 15.07.2020
(51) Int. Cl.: F16B 21/08

(54) **VERSCHLUSSSTOPFEN**

(30) Priorität: 16.08.2019 DE 102019122038
(62) Teilanmeldung aus: 21189132.0
(71) Anmelder: Illinois Tool Works Inc., Glenview IL 60025 (US)
(72) Erfinder: Leidig, Christoph, Glenview, 60025 (US); Müller, Jan, Glenview, 60025 (US)
(74) Vertreter: HGF

(57) **Zusammenfassung**

Verschlussstopfen zum Verschließen von Löchern in Gegenständen, insbesondere zum Verschließen von Karosserielöchern von Fahrzeugkarosserien, wobei der Verschlussstopfen zumindest eine erste umlaufende Wandung besitzt, welche einen Hohlraum umschließt, wobei im Hohlraum zwischen der umlaufenden Seitenwandung eine Querwandung vorhanden ist, welch eine äußere Form besitzt, die der Form des Hohlraumes entspricht und umlaufend an die Seitenwandung angebunden ist, wobei zum Zwecke der Aussteifung der umlaufenden Wandung gegen Ausweichen nach außen oder innen, sich zumindest eine Aussteifungsrippe quer durch den Hohlraum und gegenüberliegende Bereiche der umlaufenden Seitenwandung verbindend erstreckt.

## Beschreibung

Die Erfindung betrifft einen Verschlussstopfen für Löcher in Gegenständen, insbesondere für Karosserielöcher von Fahrzeugkarosserien.

Insbesondere in Fahrzeugkarosserien sind eine Vielzahl von Löchern und Durchbrechungen vorgesehen, um Fahrzeughohlräume, wie zum Beispiel die Schweller, von außen zugänglich zu machen, insbesondere zugänglich zu machen für den Zutritt von Korrosionsschutzmittel.

Bereits früh in der Herstellung eines Kraftfahrzeuges wird üblicherweise die Karosserie als Ganzes einer Phosphatierung in einem Phosphatierbad unterzogen. Anschließend erfolgt eine Waschung in einem Reinigungsbad und anschließend üblicherweise eine kataphoretische Tauchlackierung.

Für all diese Prozesse ist es notwendig, dass die entsprechenden Flüssigkeiten sich auch in die Hohlräume einer Karosserie gelangen. Hierfür besitzt die Karosserie Öffnungen und insbesondere Löcher, die anschließend verschlossen werden sollen, um den Zutritt von Schmutz und Flüssigkeiten zu verhindern.

Darüber hinaus besitzen Fahrzeugkarosserien auch Löcher, die dazu dienen, den Produktionsprozess einer Ausrichtung einzelner Karosseriebauteile bis zu deren Integration in die Gesamtkarosserie zu bewerkstelligen.

Die bekannten Löcher bzw. Öffnungen werden üblicherweise mit gummielasitischen Stopfen verschlossen. Übliche gummielastische Stopfen besitzen hierfür einen zentralen Hohlraum in Form eines flachbecherförmigen oder napfförmigen Bereich der von einer ersten Seitenwandung begrenzt wird und einer diesen Bereich übliche erste einseitig abschließende Wandung. Von einem dem Abschluss gegenüberliegenden Ende der Seitenwandungen gehen üblicherweise schräg nach außen verlaufende zweite Wandungen ab, die zum Beispiel bis zur Höhe des Abschlusses zurück reichen, so dass dieser Wandungsbereich im Querschnitt in etwa V-förmig ausgebildet ist und in der Draufsicht von der Bodenseite her einer Ringnut entspricht. Von einem freien Ende der äußeren Wandung geht üblicherweise nach außen eine umlaufende Dichtlippe ab, welche im eingesteckten Zustand auf einem Karosserieblech aufliegt, während die im Querschnitt V-förmige umlaufende Wandung das Loch durchgreift. Um eine Verankerung zu erzielen, kann an der äußeren Wandung noch eine nach außen vorstehende, im Querschnitt ring- oder pfeilartige Stufe vorhanden sein, welche das Herausrutschen aus der Öffnung verhindert.

In den Figuren 15-19 ist ein solcher Stand der Technik gezeigt.

In Figur 19 erkennt man, dass bei der Montage eines solchen Stopfens Druck auf den zentralen Bereich des Bodens des napfförmigen Elements ausgeübt werden muss. Wie in Figur 19 gut ersichtlich, kommt es dabei zu einer Aufspreizung der äußeren Wandung, so dass letztlich der Stopfen sich verbreitert oder wenn er schon teilweise in einem Loch angeordnet ist, eine Pressung auf die Lochränder ausübt. Dies erschwert die Montage.

Aus der US 6,319,436 B1 ist ein Verschlussstopfen für das Verschließen einer Öffnung in einer ebenen Fläche bekannt mit einer Mehrzahl von Rückhaltehaken und einer umlaufenden Dichtung, wobei von einer Unterseite einer Querfläche des Stopfens Rippen abgehen, die als Führungselemente beim Einstecken des Stopfens ausgebildet sind. Der Stopfen ist hierbei aus einem Hartplastik ausgebildet.

Aus der JP 61-59067 ist ein Stopfen zum Verschließen von Löchern in ebenen Gegenständen bekannt, wobei dieser Stopfen aus einem elastischen Material ausgebildet ist und eine erste innere umlaufende Wandung besitzt, welche in einer Ausführungsform außenseitig eine umlaufende Stufe besitzt und eine mit dieser zusammenwirkende Dichtlippe und mit diesen Mitteln dementsprechend ein Loch verschließen kann. Darüber hinaus kann der Stopfen im Querschnitt wellenförmig ausgebildet sein mit einer oberseitigen umlaufenden V-Nut in welcher vier Rippen ausgebildet sind.

Aus der US 2015/0135598 A1 ist ein gummielastischer Stopfen bekannt, welcher aus einer umlaufenden Wandung und einer aus dieser ausgebildeten oberseitigen Dichtlippe besteht, wobei eine innere, kuppelartige Erhöhung an einer inneren umlaufenden Fläche der Wandung angeordnet ist, wobei das Dach der kuppelartigen Erhöhung mit Rippen ausgebildet ist.

Bei diesem gummielastischen Stopfen ist von Nachteil, dass durch den lediglich linienartigen Angriff des kuppelartigen Elements an der umlaufenden Wandung, die Probleme des Standes der Technik, nämlich das Ausweichen dieser Wand nach außen oder innen bei der Montage oder Demontage, nicht beseitigt werden.

In der EP 2 810 855 A1 ist ein Dichtstopfen zur Abdichtung einer Öffnung in einem Bauteil offenbart. Dieser weist einen im Wesentlichen ringförmigen oder zylindrischen Schaft auf, der durch Rippen, die nach außen offen und hohl sind, unterbrochen ist. Weiterhin ist am Schaft eine konusförmig ausgebildete Dichtlippe vorgesehen, wobei an der Dichtlippe umindest eine flexible Faltzone vorgesehen ist, die derart reversibel faltbar ist, dass in einem gefalteten Zustand der Faltzone der Umfang der Dichtlippe im Bereich der Faltzone und/oder eines Randes der Dichtlippe reduziert ist.

Aus der EP 2 781 806 A1 geht ein Stöpsel zum Verschließen von Öffnungen hervor. Dieser Stöpsel umfasst eine radial umlaufende Seitenwandung sowie eine an die Seitenwandung angeformte Dichtfläche, wobei im Bereich zwischen der umlaufenden Seitenwandung Streben vorgesehen sein können. Hierbei kann gemäß einem Ausführungsbeispiel vorgesehen sein, dass die Streben sich bis zu einem konzentrisch zur umlaufenden Seitenwandung angeordneten kreisringförmigen Element erstrecken oder es ist vorgesehen, dass die Streben im Bereich einer in einer Oberwandung des Stopfens ausgebildeten zentralen Betätigungsmulde enden.

In der DE 201 07 612 U1 ist ein Verschlussdeckel zum Verschließen einer Öffnung offen-bart. Dieser Verschlussdeckel umfasst einen Grundkörper mit einem umlaufenden Bund, der in eine sich gegen eine Seite eines Trägers anliegende elastische Dichtlippe übergeht. Dieser Verschlussdeckel kann Streben aufweisen, die sich nicht von einer Seite des Bundes bzw. einer radial umlaufenden Seitenwandung zur anderen erstrecken. Gemäß einem wei-teren Ausführungsbeispiel kann der Verschlussdeckel eine gitterartige Versteifungsstruktur aufweisen, wobei entsprechende Zwischenräume der gitterartigen Versteifungsstruktur mit PVC ausgeschäumt sind.

Aus der EP 2 873 894 A1 geht ein Verschlussstopfen zum Verschließen einer Öffnung hervor. Dieser umfasst einen ringförmigen Dichtabschnitt und einen Spreizabschnitt, der ein-stückig mit dem Dichtabschnitt ausgeführt ist. Auch dieser Verschlussstopfen kann Streben aufweisen, die in etwa im Zentrum des Verschlussstopfens von einem konzentrisch zum ringförmigen Dichtabschnitt angeordneten Element begrenzt sind.

In der DE 10 2009 057750 A1 ist eine Vorrichtung zum Einsetzen in eine Öffnung eines Bauteils eines Automobils beschrieben. Hierbei ist an einem Flansch umlaufend ein Heiß-klebematerial angebracht, welches bei Erwärmung den Flansch abdichtend an einer Bau-teiloberfläche anklebt. Die übrigen Bereiche dieser Vorrichtung sind aus einem anderen Kunststoff ausgebildet, wobei diese Vorrichtung mittels eines 2-Komponenten-Spritzgießverfahrens herstellbar ist.

Aus der CN 206 938 651 U geht ein Verschlussstopfen hervor, der mittels eines 2-Komponenten-Spritzgießverfahrens hergestellt ist, wobei ein Dichtabschnitt aus einem Heißklebematerial ausgebildet sein kann und ein Basiskörper aus einer Hartkomponente ausgebildet ist. Der Dichtkörper kann im Verbindungsbereich mit dem Basiskörper ein Oberwandung aufweisen, die durch dünnwandige Streben ausgebildet ist, um den Basis-körper 100 aus der Hartkomponente und den Dichtkörper aus dem Heißklebematerial mit-tels des 2-Komponenten-Spritzgießverfahrens herzustellen und miteinander zu verbinden.

Aufgabe der Erfindung ist es, einen Verschlussstopfen zu schaffen, der eine verbesserte Montagefähigkeit und eine verbesserte Dichtigkeit gewährleistet.

Die Aufgabe wird mit einem Stopfen mit den Merkmalen des Anspruchs 1 gelöst.

Vorteilhafte Weiterbildungen sind in abhängigen Ansprüchen gekennzeichnet.

Der erfindungsgemäße Verschlussstopfen besitzt einen zentralen von einer ersten Wandung umschlossenen Hohlraum und ist vorzugsweise mit einer Versteifungsstruktur derart ausgebildet, dass eine innere umlaufende erste Wandung eine erhöhte Steifigkeit gegen das Ausweichen nach außen oder innen aufweist.

Somit wird insbesondere die den Hohlraum begrenzende napfförmige innere Struktur des Verschlussstopfens ausgesteift, so dass einerseits die Federkräfte, die durch die im Querschnitt V-förmige Wandungsanordnung gebildet werden, erhöht werden und dauerhafter bestehen und auf der anderen Seite trotzdem die Montage erleichtert und Demontage erschwert wird, weil der einzusteckende Bereich und insbesondere eine untere umlaufende Kante, in der die beiden Seitenwandungen zusammenlaufen, nicht so weit ausgespreizt werden, dass sie das Einstecken des Verschlussstopfens in ein Loch verhindern. Hingegen kann durch die Versteifung ein Zusammenziehen der Seitenwandungen vermindert werden, was zu einer besseren Haltekraft des Stopfens führt.

Erfindungsgemäß kann die Aussteifung auf mehrere Arten erfolgen.

Eine erste mögliche Aussteifung besteht darin, den Stopfen aus zwei Komponenten zu fertigen, bei der eine Komponente, aus der das napfförmige Element ausgebildet wird, gegenüber der äußeren Wandung aus einem steiferen Material ausgebildet wird, wobei das innere und äußere Material vorzugsweise in einem Arbeitsgang hergestellt werden und sich lediglich in ihren Materialeigenschaften unterscheiden.

Eine weitere Möglichkeit besteht darin, an die innere Wandung vom Inneren des Napfes her oder vom Äußeren des Napfes her, d.h. in die V-Nut eingeschoben oder von beiden Seiten mit einem ringförmigen Element, welches eine erhöhte Steifigkeit vorsieht, auszubilden.

Bevorzugt wird innerhalb des Hohlraumes, d.h. zwischen der inneren umlaufenden Wandung eine Rippenstruktur mit zumindest einer Rippe vorgesehen, die den Hohlraum durchquert und ggf. zu einer quer verlaufenden, den Hohlraum verschließenden Wandung reicht. Eine solche Lösung ist einfach, effektiv und kostengünstig. Der Verschlussstopfen ist dabei aus einem elastischen insbesondere gummielastischen Material ausgebildet.

Wesentlich ist also, dass zusätzliche Druck- und Zugspannung aufnehmende Elemente vorhanden sind, welche hierdurch eine Aussteifung des Stopfens bewirken.

Wesentlich ist somit auch, dass eine Struktur geschaffen wir, die es ermöglicht, dass die äu-Bere umlaufende Wandung nach wir vor federnd nachgeben kann, während die innere umlaufende Wandung eine verringerte Nachgiebigkeit und erhöhte Steifigkeit besitzt.

Die Erfindung betrifft somit insbesondere einen Verschlussstopfen zum Verschließen von Löchern in Gegenständen, insbesondere zum Verschließen von Karosserielöchern von Fahrzeugkarosserien, wobei der Verschlussstopfen zumindest eine erste umlaufende Wandung besitzt, welche einen Hohlraum umschließt, wobei im Hohlraum zwischen der umlaufenden Seitenwandung eine Querwandung vorhanden ist, welch eine äußere Form besitzt, die der Form des Hohlraumes entspricht und umlaufend an die Seitenwandung angebunden ist, wobei zum Zwecke der Aussteifung der umlaufenden Wandung gegen Ausweichen nach außen oder innen, sich zumindest eine Aussteifungsrippe quer durch den Hohlraum und gegenüberliegende Bereiche der umlaufenden Seitenwandung verbindend erstreckt.

Vorteilhafterweise ist eine Mehrzahl von Rippen vorhanden.

Bei der Erfindung kann insbesondere die Querwandung im Bereich einer umlaufenden Kante der umlaufenden Seitenwandung angeordnet sein oder an einer beliebigen Stelle der umlaufenden Seitenwandung axial zwischen den freien Kanten angeordnet sein, wobei bei der Anordnung der Querwandung im Bereich der umlaufenden Kanten und insbesondere mit diesen abschließend ein Becher-, Napf-, oder Trogförmiges Gebilde ausgebildet ist oder bei einer Anordnung zwischen den umlaufenden Kanten der Hohlraum symmetrisch oder asymmetrisch in Teilhohlräume geteilt ist.

Vorteilhaft ist es, wenn bei einer Anordnung der Querwandung im Bereich einer der umlaufenden Kanten sich zumindest eine Rippe von der zum Hohlraum weisenden Fläche der Querwandung in Richtung zu der axial gegenüberliegenden umlaufenden Kante erstreckt.

Bei einer Ausführung ist es vorteilhaft, wenn die Querwandung den Hohlraum zwischen den Kanten symmetrisch oder asymmetrisch in Teilhohlräume teilt, einer der Teilhohlräume über eine Querverrippung mit zumindest einer Rippe verfügt oder beide Teilhohlräume über eine Querverrippung mit zumindest einer Rippe verfügen.

Weiter von Vorteil ist es, wenn im Bereich einer Längsmitte des Hohlraumes oder der Teilhohlräume eine zentrale, axiale Erhöhung ausgebildet ist, zwischen welcher einerseits und der Innenfläche der umlaufenden Wandung andererseits die Rippen ausgebildet sind.

Bei einer weiteren Ausführungsform ist um die Längsmitte des Hohlraumes oder der Teilhohlräume herum koaxial eine ringförmige koaxiale Rippe angeordnet, von welcher die Rippen nach außen radial zur Innenfläche der Wandung geführt sind.

Hiermit kann von Vorteil sein, dass die ringförmige Rippe und/oder die zentrale Erhöhung über einen Teilbetrag der axialen Länge zwischen der Querwandung und einer jeweiligen umlaufenden Kante vor stehen oder über die gesamte Höhe bis zu einer umlaufenden Kante oder darüber hinaus vorstehen.

Bei einer weiteren vorteilhaften Ausführungsform sind die Vorsprünge oder die ringförmigen Rippen bei Hohl- und Teilhohlräumen beidseitig an der Querwandung in die Teilhohlräume vorstehend angeordnet.

Weitere vorteilhafte Ausführungsformen sehen vor, dass die Rippen über ihre radiale Erstreckung eine gleichmäßig Höhe, einen nach radial außen abnehmende oder nach radial außen zunehmende Höhe oder eine variierende Höhe in einer axialen Mitte des Hohlraumes zu einer umlaufenden Wandung hin besitzen.

Schließlich kann bei einer Ausführungsform von einer der umlaufenden Kanten der umlaufenden Seitenwandung nach schräg außen in Richtung von anderen umlaufenden Kanten eine äußere umlaufende Seitenwandung abgehen, die von der ersten inneren umlaufenden Wandung divergiert, wobei von einer freien Endkante der zweiten umlaufenden Wandung nach schräg außen und entgegen ihrer Erstreckungsrichtung eine Dichtlippe abgeht.

Bei einer weiteren vorteilhaften Ausführungsform kann die Dichtlippe zumindest teilbereichsweise aus einem wärmeaktivierbaren adhäsiven Material ausgebildet sein oder weist ein solches an einer zu einem Körper weisenden Fläche auf um bei einer geeigneten Wärmebehandlung die Dichtlippe und den Körper zu verkleben.

Gemäß einer weiteren vorteilhaften Ausführungsform ist der Verschlussstopfen zum Verschließen von Löchern in Gegenständen, insbesondere zum Verschließen von Karosserielöchern von Fahrzeugkarosserien vorgesehen, wobei der Verschlussstopfen vorzugsweise zumindest eine erste umlaufende Wandung besitzt, welche einen Hohlraum umschließt, wobei im Hohlraum zwischen der umlaufenden Seitenwandung eine Querwandung vorhanden ist, welche eine äußere Form besitzt, die der Form des Hohlraumes entspricht und umlaufend an die Seitenwandung angebunden ist. Dieser Verschlussstopfen kann die vorstehend aufgezeigten Merkmale in Verbindung mit deren technischer Wirkung umfassen.

Der Verschlussstopfen zeichnet sich dadurch aus, dass er als 1-Komponenten Bauteil einstückig bzw. vollständig aus einem wärmeaktivierbaren adhäsiven Material ausgebildet ist.

Als wärmeaktivierbares adhäsives Material für den 1-Komponenten-Klebe-Verschlussstopfen kann ein TPE-Material bzw. ein Material mit Klebeeigenschaften bei höheren Temperaturen von bspw. 110 °C bis 195 °C vorgesehen sein. Ein solches Material kann auch ein Heißschmelz- bzw. Heißklebe- (hotmelt) Material sein.

Die Klebeeigenschaften können bei Temperaturen von 110 °C bzw. 120 °C bzw. 130 °C bzw. 140 °C bzw. 150 °C vorgesehen sein. Die Klebeeigenschaften können bei Temperaturen bis 155 °C bzw. 165 °C bzw. 175 °C bzw. 185 °C bzw. 195 °C vorgesehen sein.

Dadurch, dass der Verschlussstopfen (hotmelt plug) vollständig aus einem einzigen wärmeaktivierbaren adhäsiven Material ausgebildet ist, erleichtert dies das Recycling, da nur ein einziges Material recycelt werden muss.

Mit einem derartigen Verschlussstopfen ist es möglich, höhere Blechdickenbereiche abzudecken. Geeignet ist der Verschlusstopfen für einen sehr hohen Blechdickenbereich von bspw. 0,7 mm bis 5 mm. Eine Abdeckung großer Lochdurchmesser mit Toleranzen ab z.B. ±0,5 mm ist möglich.

Zudem ist eine Reduzierung der Teilenummer möglich, da der Verschlussstopfen als 1-K-Montagestopfen bzw. Stöpsel, z.B. in einer Montagelinie oder als Klebedübel z.B. in einer Lackiererei verwendet werden bzw. vorgesehen sein kann.

Weiterhin zeichnet sich der Verschlusstopfen durch eine verbesserte Ergonomie durch modifizierte Krafteinleitung und geringere Verformung aus. Es wird ein deutlich verbessertes Baugruppen-Feedback während der manuellen Installation bereitgestellt. Ein Durchdrücken durch eine Durchgangsöffnung kann mit einem solchen Verschlussstopfen verhindert werden. Zudem wird eine verbesserte Haltekraft bereitgestellt.

Der Verschlusstopfen weist eine Wasserdichtigkeit bis zu 500 mm Wassersäule auf.

Weiterhin ist eine Verschlussstopfen vorgesehen, hergestellt durch ein 1-Komponenten Spritzgießverfahren aus einem wärmeaktivierbaren adhäsiven Material.

Insbesondere ist auch ein Verfahren zur Herstellung eines Verschlussstopfens mittels eines 1-Komponenten Spritzgießverfahrens aus einem wärmeaktivierbaren adhäsiven Material vorgesehen.

Durch die einstückige Ausbildung des Verschlusstopfens ist eine vereinfachte Automatisierung und eine höhere Prozesssicherheit möglich.

Die Erfindung wird anhand einer Zeichnung beispielhaft erläutert.

Es zeigen dabei:

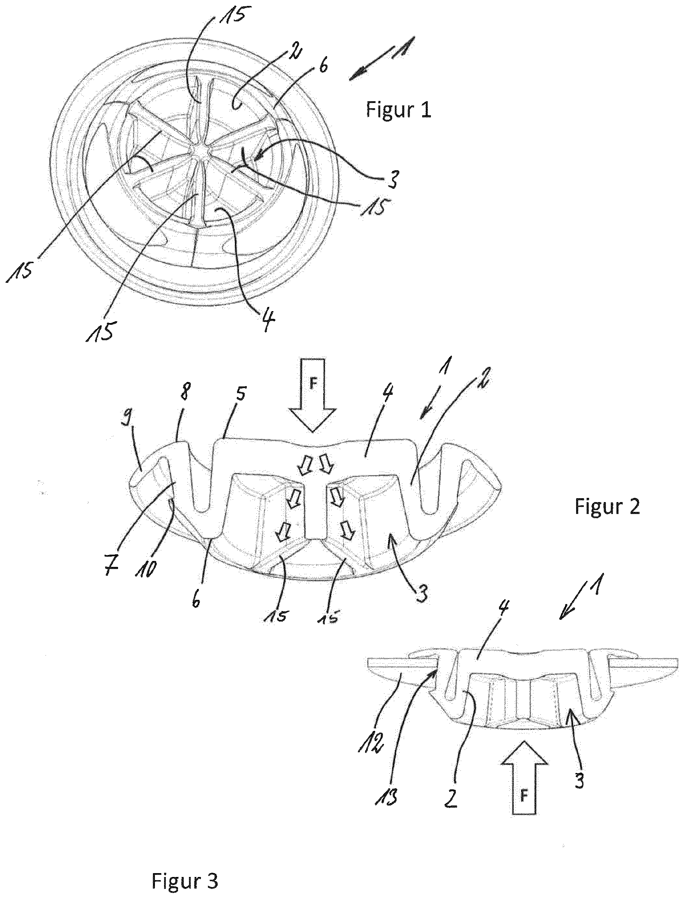

- Figur 1:: eine erste Ausführungsform eines erfindungsgemäßen Verschlussstopfens in einer perspektivischen Ansicht von unten;
- Figur 2:: einen Verschlussstopfen nach Figur 1 in einem Querschnitt; zeigend den Kraftverlauf bei der Montage
- Figur 3:: einen Verschlussstopfen nach Figur 2 in einem Querschnitt, zeigend die Krafteinleitung bei der Demontage;

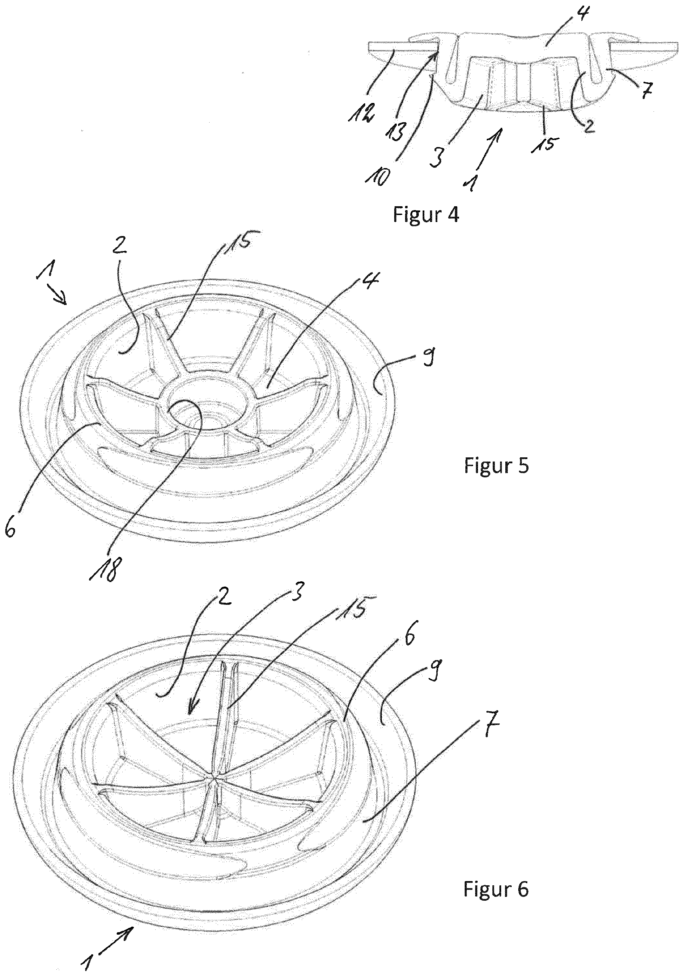

- Figur 4:: den Verschlussstopfen nach Figur 3 in einem Querschnitt, zeigend verbesserte Dichteigenschaften;
- Figur 5:: eine weitere Ausführungsform eines erfindungsgemäßen Stopfens;
- Figur 6:: eine weitere Ausführungsform eines erfindungsgemäßen Stopfens;

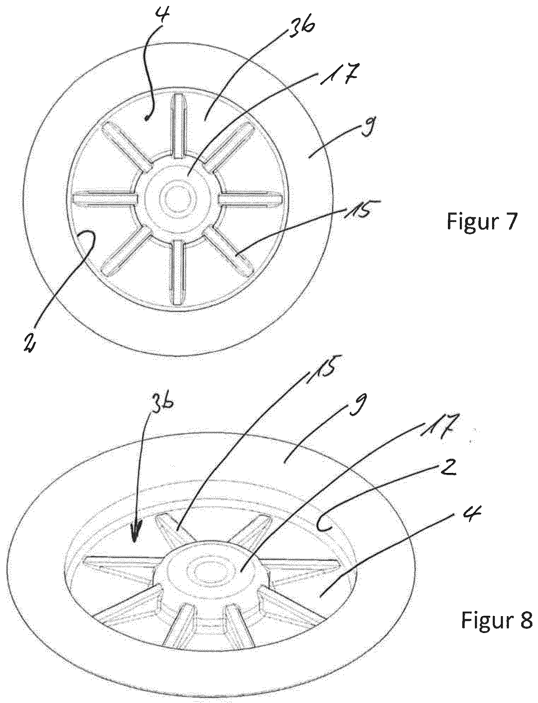

- Figur 7:: wiederum eine weitere Ausführungsform des erfindungsgemäßen Stopfens;
- Figur 8:: eine weitere Ausführungsform des erfindungsgemäßen Stopfens;

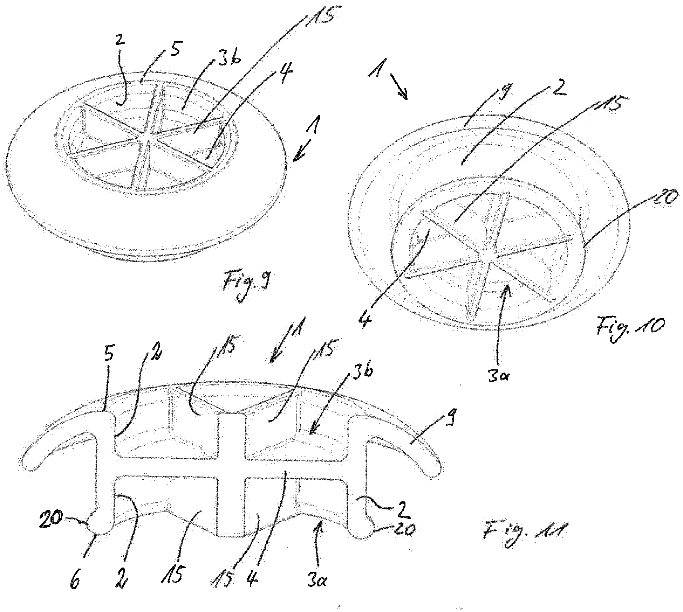

- Figur 9:: eine weitere vorteilhafte Ausführungsform des erfindungsgemäßen Stopfens; einer perspektivischen Draufsicht;
- Figur 10:: den Stopfen nach Figur 9 in einer perspektivischen Ansicht von unten;
- Figur 11:: den Stopfen nach Figur 9 und 10 in einem Querschnitt;

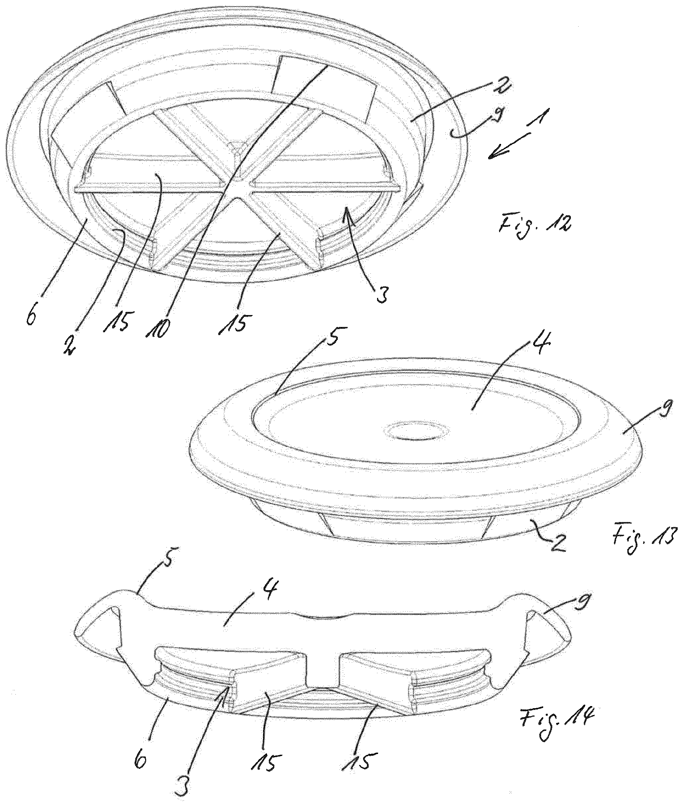

- Figur 12:: eine weitere Ausführungsform eines erfindungsgemäßen Verschlussstopfens mit einer umlaufenden Wandung und einer einseitigen Verrippung;
- Figur 13:: der Stopfen nach Figur 12 in einer Seitenansicht;
- Figur 14:: der Stopfen nach Figur 13 in einer geschnittenen perspektivischen Ansicht von unten;

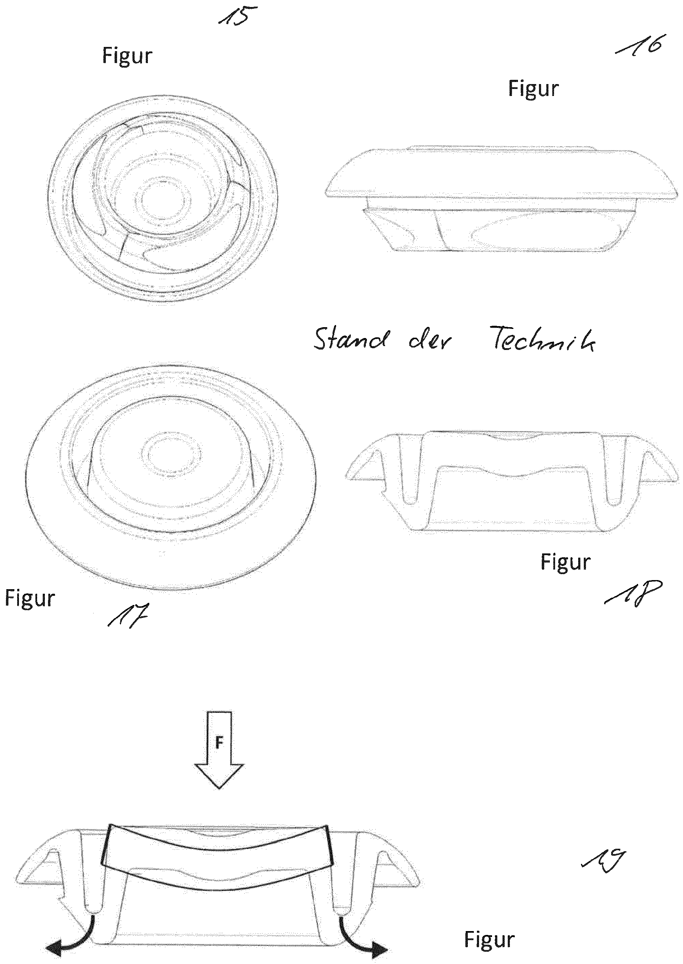

- Figur 15-19:: einen Verschlussstopfen nach dem Stand der Technik.

Ein erfindungsgemäßer Verschlussstopfen 1 besitzt eine erste umlaufende Seitenwandung 2, welche einen Hohlraum 3 umschließt.

Von der umlaufenden Seitenwandung 2 begrenzt ist im Hohlraum 3 eine Querwandung 4 vorgesehen, welche eine äußere Form besitzt, die der Form des Hohlraums 3 entspricht. Die umlaufende Seitenwandung 2 besitzt eine erste umlaufende freie Kante 5 und eine zweite umlaufende freie Kante 6, welche an diametral gegenüberliegenden Enden der Wandung 2 vorhanden sind.

Die Querwandung 4 kann jeweils in dem Bereich einer der umlaufenden Kanten 5, 6 angeordnet sein oder an einer beliebigen Stelle der umlaufenden Seitenwandung 2 zwischen den freien Kanten 5, 6 (Figur 11).

In dem Fall, indem die Querwandung 4 im Bereich der umlaufenden Kanten 5, 6, insbesondere mit diesen abschließend angeordnet ist, wird somit ein Becher-, Napf- oder Trog förmiges Gebilde ausgebildet während bei einer Anordnung zwischen den umlaufenden Kanten 5, 6 der Hohlraum 3 symmetrisch oder asymmetrisch in Teilhohlräumen 3a, 3b geteilt ist.

Von einer umlaufenden zweiten Kante 6 der umlaufenden Seitenwandung 2 kann insbesondere nach schräg außen, in Richtung zur ersten umlaufenden Kante 5, eine äußere umlaufende Seitenwandung 7 abgehen, die von der ersten inneren umlaufenden Wandung 2 divergiert.

Die zweite umlaufenden äußere Wandung 7 erstreckt sich beispielsweise bis auf die Höhe der ersten umlaufenden Kante 5.

Von der freien Endkante 8 der zweiten umlaufenden Wandung 7 geht nach schräg außen und entgegen der Erstreckungsrichtung der zweiten Wandung 7 eine Dichtlippe 9 ab.

An der zweiten äußeren Wandung 7 ist umlaufend eine Stufe 10 angeordnet, welche die zweite äußere Wandung 7 in diesem Bereich etwas verjüngt. Die Stufe 10 ist optional (in Figur 5 und 6 ist diese z.B. nicht vorhanden)

Bezüglich der axialen Erstreckung der zweiten äußeren Wandung 7 ist diese Stufe 10 in etwa auf Höhe einer freien umlaufenden Kante 11 der Dichtlippe 9 angeordnet.

Die Dichtlippe 9 einerseits und die Stufe andererseits wirken (Figur 3) mit einem flach plattenartigen Körper 12, wie einem Blech zusammen, in dem ein Loch 13 vorhanden ist, welches durch den Verschlussstopfen 1 verschlossen werden soll.

Nach dem Durchstecken des Verschlussstopfens 1 durch das Loch 13 liegt die Dichtlippe unter einer materialbedingten Rückstellkraft auf einer Seite auf dem flachplattenartigen Körper 12 auf und ist bestrebt, den Verschlussstopfen aus dem Loch 13 wieder hinauszuziehen. Die radiale Verpressung der äußeren Wandung 7 mit der Lochlaibung des Loch 13 verhindert, dass der Stopfen herausgezogen wird.

Die umlaufende Stufe 10 an der äußeren Wandung 7 liegt dabei auf der gegenüberliegenden Seitenfläche des flachplattenartigen Körpers 12 an und verhindert dieses. Dies ist jedoch nur notwendig, wenn das Material und das Stopfendesign nicht genügend radiale Verpressung aufbringen kann.

Die innere umlaufende Wandung 2 und die äußere umlaufende Wandung 7 begrenzen zwischen sich eine Ringnut 14, welche um die innere Wandung 2 und die Querwandung 4 herum umläuft.

Durch diesen Abstand zwischen der inneren Wandung 2 und der äußeren Wandung 7 und die Ausbildung aus einem elastischen Material drückt die äußere Wandung 7 unter der Rückstellkraft des elastischen Materials gegen eine umlaufende Kante des Lochs 13 und dichtet dies hierdurch ab. Innere Wandung 2 und äußere Wandung wirken hierbei nach Art einer Schenkelfeder zusammen.

Der Stopfen 1 besitzt bei dieser Ausführungsform vorzugsweise ein geringes radiales Übermaß bezogen auf die Weite des Lochs 13 um eine dichtende Wirkung herbeizuführen. Da der Stopfen 1 aus einem elastischen Material hergestellt ist, ist es gleichwohl ohne weiteres möglich ihn durch das Loch 13 hindurchzustecken.

Auch bei dieser Ausführungsform kann die Querwandung 4 zwischen den umlaufenden Kanten 5, 6 (Figuren 9 bis 11), die Querwandung 4 kann aber auch mit einer der umlaufenden Kanten 5, 6 abschließen oder im Wesentlichen abschließen (Figuren 12 bis 14).

Neben dem beschriebenen Wulst (20) kann auch eine Ausführungsform mit einer umlaufenden Wandung 2 (Figur 13) mit einer nach radial außen vorstehenden Stufe 10 ausgebildet sein als Rückhaltemittel gegen das Ausziehen aus einer Öffnung 13.

Bei einer weiteren vorteilhafte Ausführungsform ist eine zweite äußere Wandung 7 nicht vorhanden, sondern eine Dichtlippe 9 geht von einer umlaufenden Kante 5 der umlaufenden Seitenwandung 2 ab.

Als ein dem Herausziehen des Stopfens entgegenwirkendes Rückhaltemittel kann bei dieser Ausführungsform die umlaufenden Kante 6 mit einem nach außen vorstehenden Wulst 20 ausgebildet sein, der in gleicher Weise agiert wie die Stufe 10 bei der Ausführungsform mit zwei Wandungen 2, 7.

Zur Aussteifung des Stopfens erstreckt sich zumindest eine Aussteifungsrippe 15 quer durch den Hohlraum 3 und ist dabei an zwei gegenüberliegenden Bereichen der umlaufenden Seitenwandung 2 angebunden.

Insbesondere kann auch eine Mehrzahl von Rippen 15 vorhanden sein, welche sich insbesondere in einem im Bereich einer Längsmittenachse 16 des Hohlraumes kreuzen.

Bei einer Ausführungsform des Verschlussstopfens 1 bei dem die Querwandung 4 im Bereich einer umlaufenden Kante 5, 6 angeordnet ist bzw. mit dieser abschließt, erstreckt sich die zumindest einer Rippe 15 beispielsweise von der zum Hohlraum 3 weisenden Fläche der Querwandung 4 in Richtung zu der axial gegenüberliegenden umlaufenden Kante 5, 6.

Bei einer Ausführungsform bei der die Querwandung 4 den Hohlraum 3 zwischen den Kanten 5, 6 symmetrisch oder asymmetrisch teilt kann einer der Teilhohlräume 3a, 3b über eine Querverrippung mit zumindest einer Rippe 15 verfügen. Zur Aussteifung können jedoch auch beidseitig der Querwandung 4 beide Teilhohlräume 3a, 3b mit einer Querverrippung mit zumindest einer Rippe 15 ausgebildet sein.

Bei einer weiteren vorteilhaften Ausführungsform ist im Bereich einer Längsmitte des Hohlraumes 3 eine zentrale, axiale Erhöhung 17 ausgebildet, zwischen der und der Innenfläche der Wandung 2, die Rippen 15 ausgebildet sind (Figuren 7, 8).

Bei einer weiteren Ausführungsform (Figur 5) ist koaxial im Hohlraum 3 eine ringförmige koaxiale Rippe 18 angeordnet von welcher die Rippen 15 nach außen radial zur Innenfläche der Wandung 2 geführt sind.

Die ringförmige Rippe 18 und/oder die zentrale Erhöhung 17 können über einen Teilbetrag der axialen Länge zwischen der Querwandung 4 und einer jeweiligen umlaufenden Kante 5, 6 vorstehen oder über die gesamte Höhe bis zur umlaufenden Kante 5, 6 oder darüber hinaus vorstehen.

Bei einer Ausführungsform bei der die Querwandung 4 den Hohlraum 3 symmetrisch oder asymmetrisch in Teilhohlräume 3a, 3b teilt können derartige Vorsprünge 17 oder ringförmige Rippen 18 selbstverständlich beidseitig an der Querwandung 4 angeordnet sein.

Die Rippen 15 können dabei über ihre Erstreckung eine gleichmäßige Höhe besitzen oder ihre Höhe zu einer Längsmitte des Hohlraumes 3 verringern (Figur 6) oder ihre Höhe von einer axialen Mitte des Hohlraumes 3 zu einer umlaufenden Wandung 2 hin verringern. Darüber hinaus sind selbstverständlich jede Zwischenformen möglich bei denen sich die Höhe zunächst verringert und dann wieder auf den Ausgangswert oder darüber hinaus erhöht.

Bei einer vorteilhaften Weiterbildung ist die Dichtlippe 9 zumindest teilbereichsweise aus einem wärmeaktivierbaren adhäsiven Material ausgebildet oder weist ein solches an einer zu einem Körper 12 weisenden Fläche auf um bei einer geeigneten Wärmebehandlung die Dichtlippe 9 und den Körper 12 zu verkleben.

Zudem ist ein Verfahren zur Herstellung eines vorstehend aufgezeigten Verschlussstopfens mittels eines 2-Komponenten Spritzgießverfahrens vorgesehen.

Gemäß einer weiteren vorteilhaften Ausführungsform ist der Verschlussstopfen zum Verschließen von Löchern in Gegenständen, insbesondere zum Verschließen von Karosserielöchern von Fahrzeugkarosserien, vorgesehen, wobei der Verschlussstopfen 1 zumindest eine erste umlaufende Wandung 2 besitzt, welche einen Hohlraum 3 umschließt, wobei im Hohlraum 3 zwischen der umlaufenden Seitenwandung 2 eine Querwandung 4 vorhanden ist, welche eine äußere Form besitzt, die der Form des Hohlraumes 3 entspricht und umlaufend an die Seitenwandung 2 angebunden ist.

Dieser Verschlussstopfen kann die vorstehend aufgezeigten Merkmale in Verbindung mit deren technischer Wirkung umfassen.

Der Verschlussstopfen zeichnet sich dadurch aus, dass er als 1-Komponenten Bauteil einstückig bzw. vollständig aus einem wärmeaktivierbaren adhäsiven Material ausgebildet ist.

Als wärmeaktivierbares adhäsives Material für den 1-Komponenten-Klebe-Verschlussstopfen ist ein TPE-Material und/oder ein Material mit Klebeeigenschaften bei höheren Temperaturen von bspw. 110 °C bis 195 °C vorgesehen.

Die Klebeeigenschaften sind bei Temperaturen von 110 °C bzw. 120 °C bzw. 130 °C bzw. 140 °C bzw. 150 °C vorgesehen. Die Klebeeigenschaften sind bei Temperaturen bis 155 °C bzw. 165 °C bzw. 175 °C bzw. 185 °C bzw. 195 °C vorgesehen.

Weiterhin ist ein Verschlussstopfen vorgesehen, hergestellt durch ein 1-Komponenten Spritzgießverfahren aus einem wärmeaktivierbaren adhäsiven Material.

Insbesondere ist auch ein Verfahren zur Herstellung eines Verschlussstopfens mittels eines 1-Komponenten Spritzgießverfahrens aus einem wärmeaktivierbaren adhäsiven Material vorgesehen.

Bei der Erfindung ist von Vorteil, dass durch die Anordnung einer Querverrippung mit zumindest einer Rippe innerhalb eines Hohlraumes eines Verschlussstopfens eine innere umlaufende Wandung, welche den Hohlraum begrenzt und eine Querwandung des Stopfens so ausgesteift werden, dass beim Hineindrücken in eine zu verschließende Öffnung einerseits oder beim Herausdrücken aus dieser Öffnung der Stopfen nicht so weit elastisch verformt wird, dass der Montage oder Demontage größere Kräfte entgegenstehen. Bei der Montage werden die Kräfte durch ein Aufspreizen der Wandung 7 geringer, bei der Demontage kann sich die Wandung durch die Versteifung weniger nach innen zusammenziehen und somit resultiert eine verbesserte Haltewirkung.

## Patentansprüche

1. Verschlussstopfen zum Verschließen von Löchern in Gegenständen, insbesondere zum Verschließen von Karosserielöchern von Fahrzeugkarosserien, wobei der Verschlussstopfen (1) zumindest eine erste umlaufende Wandung (2) besitzt, welche einen Hohlraum (3) umschließt, wobei im Hohlraum (3) zwischen der umlaufenden Seitenwandung (2) eine Querwandung (4) vorhanden ist, welch eine äußere Form besitzt, die der Form des Hohlraumes (3) entspricht und umlaufend an die Seitenwandung (2) angebunden ist,
**dadurch gekennzeichnet,**
**dass** der Verschlussstopfen vollständig als 1-Komponenten Bauteil aus einem wärmeaktivierbaren adhäsiven Material ausgebildet ist.

2. Verschlussstopfen nach Anspruch 1,
**dadurch gekennzeichnet,**
**dass** zum Zwecke der Aussteifung der umlaufenden Wandung (2) gegen Ausweichen nach außen oder innen, sich zumindest eine Aussteifungsrippe (15) quer durch den Hohlraum (3) und gegenüberliegende Bereiche der umlaufenden Seitenwandung (2) verbindend erstreckt.

3. Verschlussstopfen nach Anspruch 1 oder 2;
**dadurch gekennzeichnet,**
**dass** als wärmeaktivierbares adhäsives Material ein TPE-Material und/oder ein Material mit Klebeeigenschaften bei höheren Temperaturen von bspw. 110 °C bis 195 °C vorgesehen ist.

4. Verschlussstopfen nach Anspruch 2 oder 3,
**dadurch gekennzeichnet,**
**dass** eine Mehrzahl von Rippen (15) vorhanden ist.

5. Verschlussstopfen nach einem der vorhergehenden Ansprüche;
**dadurch gekennzeichnet,**
**dass** die Querwandung (4) im Bereich einer umlaufenden Kante (5, 6) der umlaufenden Seitenwandung (2) angeordnet ist oder an einer beliebigen Stelle der umlaufenden Seitenwandung (2) axial zwischen den freien Kanten (5, 6) angeordnet ist, wobei bei der Anordnung der Querwandung (4) im Bereich der umlaufenden Kanten (5, 6) und insbesondere mit diesen abschließend ein becher-, napf-, oder trogförmiges Gebilde ausgebildet ist oder bei einer Anordnung zwischen den umlaufenden Kanten (5, 6) der Hohlraum (3) symmetrisch oder asymmetrisch in Teilhohlräume (3a, 3b) geteilt ist.

6. Verschlussstopfen nach einem der vorhergehenden Ansprüche,
**dadurch gekennzeichnet,**
**dass** bei einer Anordnung der Querwandung (4) im Bereich einer der umlaufenden Kanten (5, 6) sich zumindest eine Rippe (15) von der zum Hohlraum (3) weisenden Fläche der Querwandung (4) in Richtung zu der axial gegenüberliegenden umlaufenden Kante (5, 6) erstreckt.

7. Verschlussstopfen nach Anspruch 5 oder 6,
**dadurch gekennzeichnet,**
**dass** wenn die Querwandung (4) den Hohlraum (3) zwischen den Kanten (5, 6) symmetrisch oder asymmetrisch in Teilhohlräume (3a, 3b) teilt, einer der Teilhohlräume (3a, 3b) über eine Querverrippung mit zumindest einer Rippe (15) verfügt oder beide Teilhohlräume (3a, 3b) über eine Querverrippung mit zumindest einer Rippe (15) verfügen.

8. Verschlussstopfen nach einem der vorhergehenden Ansprüche,
**dadurch gekennzeichnet,**
**dass** im Bereich einer Längsmitte des Hohlraumes (3) oder der Teilhohlräume (3a, 3b) eine zentrale, axiale Erhöhung (17) ausgebildet ist, zwischen welcher einerseits und der Innenfläche der Wandung (2) andererseits die Rippen (15) ausgebildet sind.

9. Verschlussstopfen nach einem der vorhergehenden Ansprüche,
**dadurch gekennzeichnet,**
**dass** um die Längsmitte des Hohlraumes (3) oder der Teilhohlräume (3a, 3b) herum koaxial eine ringförmige koaxiale Rippe (18) angeordnet ist, von welcher die Rippen (15) nach außen radial zur Innenfläche der Wandung (2) geführt sind.

10. Verschlussstopfen nach Anspruch 8 oder 9,
**dadurch gekennzeichnet,**
**dass** die ringförmige Rippe (18) und/oder die zentrale Erhöhung (17) über einen Teilbetrag der axialen Länge zwischen der Querwandung (4) und einer jeweiligen umlaufenden Kante (5, 6) vor stehen oder über die gesamte Höhe bis zu einer umlaufenden Kante (5, 6) oder darüber hinaus vorstehen.

11. Verschlussstopfen nach einem der vorhergehenden Ansprüche,
**dadurch gekennzeichnet,**
**dass** Vorsprünge (17) oder ringförmige Rippen (18) bei Hohl- und Teilhohlräumen (3, 3a, 3b) beidseitig an der Querwandung (4) in die Teilhohlräume (3a, 3b) vorstehend angeordnet sind.

12. Verschlussstopfen nach einem der vorhergehenden Ansprüche,
**dadurch gekennzeichnet,**
**dass** die Rippen (15) über ihre radiale Erstreckung eine gleichmäßige Höhe, eine nach radial außen abnehmende oder nach radial außen zunehmende Höhe oder eine variierende Höhe von einer axialen Mitte des Hohlraumes (3) zu einer umlaufenden Wandung (2) hin besitzen.

13. Verschlussstopfen nach einem der vorhergehenden Ansprüche,
**dadurch gekennzeichnet,**
**dass** von einer der umlaufenden Kanten (5, 6) der umlaufenden Seitenwandung (2) nach schräg außen in Richtung von anderen umlaufenden Kanten (5, 6) eine äußere umlaufende Seitenwandung (7) abgeht, die von der ersten inneren umlaufenden Wandung (2) divergiert, wobei von einer freien Endkante (8) der zweiten umlaufenden Wandung (7) nach schräg außen und entgegen ihrer Erstreckungsrichtung eine Dichtlippe (9) abgeht.

14. Verschlussstopfen nach einem der Ansprüche 1 bis 12,
**dadurch gekennzeichnet,**
**dass** von einer der umlaufenden Kanten (5, 6) der umlaufenden Seitenwandung (2) nach schräg außen und entgegen der Erstreckungsrichtung eine Dichtlippe (9) abgeht, wobei an einer gegenüberliegenden umlaufenden Kante (5, 6) als Rückhaltemittel gegen das Ausziehen des Stopfens aus einem Loch, ein Wulst (20) oder eine Stufe (10) ausgebildet ist.

15. Verschlussstopfen nach Anspruch 13 oder 14,
**dadurch gekennzeichnet,**
**dass** die Dichtlippe (9) zumindest teilbereichsweise aus einem wärmeaktivierbaren adhäsiven Material ausgebildet ist oder ein solches an einer zu einem Körper (12) weisenden Fläche aufweist, um bei einer geeigneten Wärmebehandlung die Dichtlippe (9) und den Körper (12) zu verkleben.

16. Verschlussstopfen nach einem der vorhergehenden Ansprüche, hergestellt durch ein 1-Komponenten aus einem wärmeaktivierbaren adhäsiven Material.
